Europäisches Patentamt

European Patent Office

Office européen des brevets

(19)

(11) Veröffentlichungsnummer: **0 025 858**
**B1**

(12) **EUROPÄISCHE PATENTSCHRIFT**

(45) Veröffentlichungstag der Patentschrift:
08.06.83

(21) Anmeldenummer: 80104811.7

(22) Anmeldetag: 14.08.80

(51) Int. Cl.³: **C 01 B 3/00**, F 17 C 11/00,
C 10 L 5/00

(54) **Reversibler Speicher für gasförmigen Wasserstoff.**

(30) Priorität: 18.09.79 US 76649

(43) Veröffentlichungstag der Anmeldung:
01.04.81 Patentblatt 81/13

(45) Bekanntmachung des Hinweises auf die Patenterteilung:
08.06.83 Patentblatt 83/23

(84) Benannte Vertragsstaaten:
BE CH DE FR GB LI NL SE

(56) Entgegenhaltungen:
DE-A-2 527 794
DE-A-2 855 413
US-A-4 077 788

„Applied Physics Letters", B. 32, Nr. 7, 1. April 1978, S. 439-441, New York, USA, J.I. Pankove *et al.*: „Hydrogenation and dehydrogenation of amorphous and crystalline silicon".

(73) Patentinhaber: International Business Machines Corporation, Armonk, N.Y. 10504 (US)

(72) Erfinder: Freeouf, John Lawrence, Susan Drive, Peekskill New York 10566 (US)
Erfinder: Woodall Jerry MacPershon, 336 Cherry Street, Bedford Hills New York 10507 (US)

(74) Vertreter: Schröder, Otto H., Dr.-Ing., c/o International Business Machines Corporation Zurich Patent Operations Säumerstrasse 4, CH-8803 Rüschlikon/ZH (CH)

Reversibler Speicher für gasförmigen Wasserstoff

Die Erfindung betrifft einen reversiblen Speicher für gasförmigen Wasserstoff sowie ein Verfahren zum Betrieb eines solchen Speichers.

Das Element Wasserstoff ist in der gasförmigen Form ein brauchbarer und umweltfreundlicher Brennstoff, der auf vielfältige Weise leicht hergestellt werden kann. Ein wesentlicher Nachteil seiner Anwendung ist jedoch die Schwierigkeit, die Sicherheit der Speicherung und leichte Transportfähigkeit von Wasserstoff mit dem bequemen Zugang für den Gebrauch und die problemlose Handhabung zu vereinen.

Versuche wurden unternommen, um Verfahren zur Einkapselung von Wasserstoff in Festkörper zu finden, um den Gebrauch handlicher zu machen. Der wesentliche Ausgangspunkt für solche Anstrengungen ist die Bildung von Metallhydriden. Solche Materialien bringen jedoch andere Probleme, wie Kosten, oder die Notwendigkeit, unter hohen Drücken und bei verhältnismässig hohen Temperaturen zu arbeiten. Das Ergebnis ist meist eine gewichtsmässig geringe Konzentration des gelösten oder angelagerten Wasserstoffs. Weiterhin ist eine zusätzliche Erwärmung notwendig, um in diesen Materialien den gespeicherten Wasserstoff freizusetzen. Ausserdem ist der Wasserstoff in dem Metall nur gelöst.

Der reversible Speicher nach der Erfindung sowie ein gefahrloses Verfahren zu dessen Betrieb sind in den Patentansprüchen definiert.

Fig. 1 illustriert eine Vorrichtung für die Erzeugung von amorphem hydrierten Material.

Fig. 2 ist eine schematische Darstellung einer Vorrichtung zum Freisetzen von Wasserstoff aus dem amorphen hydrierten Material.

Fig. 3 ist eine Darstellung einer Vorrichtung für die Wiederaufhydrierung des amorphen Materials.

Die Erfindung ermöglicht die Speicherung von atomarem Wasserstoff in einer amorphen Substanz mit tetraedischer Koordination bis etwa 50 Atomprozent. Der Wasserstoff wird an die Substanz kovalent gebunden. Die amorphe Wirtssubstanz ist im Nahbereich tetraedisch koordiniert, und das Wirtsmaterial behält seine tetraedische Koordination sowohl bei der Freigabe des Wasserstoffs als auch bei der Wiederaufladung mit Wasserstoff.

Tetraedisch koorniniertes amorphes Material bedeutet, dass für den grössten Anteil des Materials die vier nächsten Nachbaratome näherungsweise die Scheitelpunkte eines Tetraeders bilden. Das Material kann daher auch als eine ungeordnete Zinkblendestruktur oder Diamantstruktur betrachtet werden.

Die Freigabe des Wasserstoffs wird durch Anheben der Temperatur des Wirtsmaterials bewirkt. Die atomare Koordination des Wirtsmaterials wird während der Freisetzung des Wasserstoffs nicht gestört. Bei der Einführung des Wasserstoffs in das amorphe tetraedisch koordinierte Material ist eine Energiezufuhr notwendig, weil der Wasserstoff in dem Wirtsmaterial atomar gespeichert wird, während gasförmiger Wasserstoff in freiem Zustand nur molekular vorkommt. Diese Übergangsenergie wird jedoch wiedergewonnen, wenn der Wasserstoff aus dem amorphen Material freigesetzt wird und wieder molekular wird.

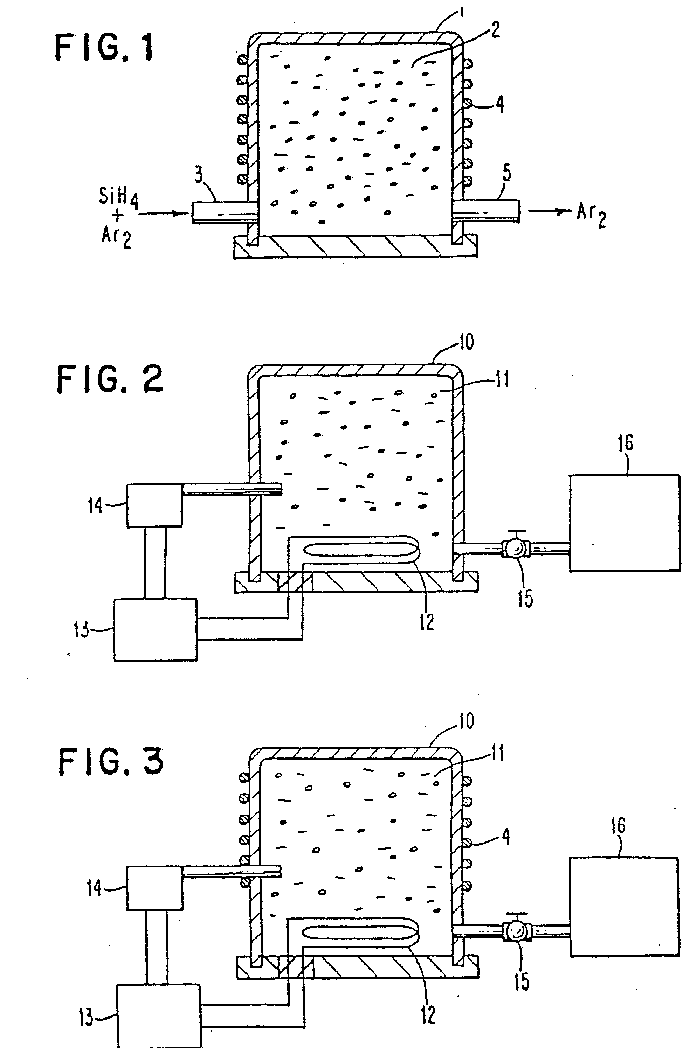

Die Fig. 1 zeigt eine schematische Darstellung einer Vorrichtung für die Bildung von hydriertem amorphen Material.

Es gibt viele Materialien mit tetraedischer Koordination wie beispeilsweise Silizium, Germanium oder Kohlenstoff. Vorzugsweise wird Silizium verwendet, weil es am leichtesten verfügbar ist. Die beschriebenen Ausführungsbeispiele beziehen sich daher auf Silizium.

In der Vorrichtung nach der Fig. 1 ist ein Reaktionsgefäss 1 vorgesehen, in welchem hydriertes amorphes Silizium 2 in der Form von Pulver oder Flocken hergestellt wird. Ein Gemisch aus Silan ($SiH_4$), Wasserstoff ($H_2$) und Argon ($Ar_2$) wird durch einen Anschluss 3 in das Reaktionsgefäss 1 eingeleitet. Gleichzeitig wird einer Spule 4 Hochfrequenzenergie zugeführt. Das Silan zersetzt sich in amorphes hydriertes Silizium. Bei der Zersetzung bewirkt die Energie des Hochfrequenzfeldes von der Spule 4 die Umwandlung des zusätzlichen Wasserstoffs aus seinem molekularen Zustand in den atomaren Zustand. Der atomare Wasserstoff dringt in das zersetzte Silan ein und bildet feinverteiltes amorphes hydriertes Silizium 2 mit einer pulverisierten oder flockenartigen Struktur, während das Argon das Reaktionsgefäss über den Anschluss 5 verlässt.

In der Praxis wird das Reaktionsgefäss 1 zunächst auf etwa 550° C aufgeheizt. Das Gemisch aus Silan, Wasserstoff und Argon wird in den Anschluss 3 mit einem Druck eingeführt, der geeignet ist, eine hochfrequente Glimmentladung innerhalb der Spule 4 aufrechtzuerhalten, wodurch atomarer Wasserstoff erzeugt wird. Die Glimmentladung wird während der ganzen Zeit aufrechterhalten, bis die Menge der Substanz 2 mit Wasserstoff gesättigt ist. Das ist etwa im Bereich von 50 Atomprozent Wasserstoff der Fall.

Wenn der feste Brennstoff aus hydriertem amorphen Silizium erst einmal mit Wasserstoff aufgeladen ist, verbleibt der Wasserstoff darin während normaler Behandlung oder Handhabung und der dabei auftretenden Temperaturveränderungen.

In der Fig. 2 ist schematisch eine Vorrichtung dargestellt, um den gebundenen gasförmigen Brennstoff aus seinem Speichermedium aus einer feinverteilten amorphen Festkörpersubstanz für den Gebrauch freizusetzen.

Ein Reaktionsgefäss 10 ist mit einem Speichermedium 11, einer hydrierten amorphen Festkörpersubstanz in feinverteilter Form versehen. Im Reaktor befindet sich eine Heizspule 12, welche von einer Stromversorgung 13 beschickt wird, wobei die Reaktionsbedingungen mit Hilfe eines Druckfühlers 14 überwacht werden. Ein Ventil 15 dient zum Abziehen des im Reaktionsgefäss 10 erzeugten Gases in einen getrennten Behälter 16.

Im Reaktor wird durch die Heizspule 12 die Temperatur auf einen Wert im Bereich von 250 bis 550° C angehoben. Bei dem letztgenannten Temperaturwert wird Wasserstoff in gasförmigem Zustand aus dem amorphen Silizium freigesetzt. Während der Bildung des Gases wird auch latente Bildungswärme frei. Diese freigesetzte Wärme trägt zur Aufrechterhaltung der Reaktion der Freisetzung von Wasserstoff bei. Dies steht völlig im Gegensatz zu den oben genannten bekannten Einrichtungen mit Metallhydriden für die Speicherung, wo Wärmezufuhr erforderlich ist, um den Wasserstoff freizusetzen und weiterhin diese Reaktion aufrechtzuerhalten.

Mit Hilfe des Druckfühlers 14 kann die beste Temperatur bestimmt werden, bei welcher gasförmiges Material entwickelt wird, damit das Speichermedium nicht allen gasförmigen Brennstoff zur gleichen Zeit abgibt. Durch ein Ventil 15 wird das Gas in einen Speicherbehälter 16 für den Gebrauch überführt.

Die Fig. 3 zeigt schematisch eine Vorrichtung ähnlich der in der Fig. 2 dargestellten, aber für den Zweck, das amorphe Speichermedium für erneuten Gebrauch wieder aufzuladen.

Gleiche Teile oder Teile mit gleicher Funktion sind in den Figuren mit gleichen Bezugszeichen versehen. In der Fig. 3 befindet sich der Wasserstoff für das Wiederaufladen in dem Behälter 16 und wird durch ein Ventil 15 in das Innere des Reaktionsgefässes 10 eingeführt, welches die feinverteilte amorphe Substanz des Speichermediums 11, hier Silizium, enthält. Die Temperatur wird von 300 auf etwa 400° C mit Hilfe der Heizspule 12 erhöht. Weitere Energie wird von der Stromversorgung 13 unter der Kontrolle des Druckfühlers 14 durch das hochfrequente Feld der Spule 4 zugeführt, wodurch der molekulare Wasserstoff in atomaren Wasserstoff aufgebrochen wird, so dass er mit dem Speichermedium eine kovalente Bindung eingehen kann. Auf diese Weise kann für den festen Brennstoff Wasserstoff in der Grössenordnung von 13 Atomprozent wieder eingeführt werden.

Daraus ist ersichtlich, dass der Wasserstoff in atomarer Form gespeichert wird, aber zum Gebrauch in molekularer Form entnommen werden kann, und dass der Prozess umkehrbar ist.

Etwa 60 l amorphes Siliziummaterial mit 50 Atomprozent Wasserstoff enthalten 130 kg Silizium und 4,6 kg Wasserstoff. Wenn weiter angenommen wird, dass der Behälter, die Heizeinrichtungen usw. noch einige Kilos wiegen, dann beträgt der Anteil des Wasserstoff an dem gesamten System etwa 3,4 Gewichtsprozent. Das ist sehr günstig, wenn man es mit bekannten Einrichtungen vergleicht. Gewöhnliche Druckflaschen enthalten nur etwa 1% gasförmigen Brennstoff.

Für den mehrmaligen Gebrauch der Einrichtung unter Ausnutzung der umkehrbaren Reaktion muss man sehr darauf achten, dass man nicht die Temperatur überschreitet, bei der der Wasserstoff irreversibel freigesetzt wird. Das tritt auf, wenn das hydrierte amorphe Silizium auf seine Kristallisationstemperatur oder höher erhitzt wird, die im Bereich von 600 bis 800° C liegt. Wenn dies einmal auftritt, dann muss das Silizium erneut in eine Form gebracht werden, wie beispielsweise das gasförmige Silan, woraus es dann wieder mit Hilfe einer Glimmentladung in den Zustand des hydrierten amorphen Siliziums gebracht werden kann.

Solange die Temperatur im Betrieb niemals 550° C überschreitet, bleibt der Prozess umkehrbar.

Der ausnutzbare Temperaturbereich für die umkehrbare Speicherung und Freigabe von gasförmigen Brennstoffen wie Wasserstoff kann verschieden sein, je nachdem, welche Wirtssubstanz verwendet wird. Sie kann Beimengungen solcher Elemente wie Germanium und/oder von Elementen seltener Erden wie Lanthan aufweisen. Für einige Anwendungen ist es erwünscht, die Freigabetemperatur möglich niedrig zu haben, beispielsweise in Fällen, wo Abwärme aus anderen Prozessen zur Verfügung steht.

**Patentansprüche**

1. Reversibler Speicher für gasförmigen Wasserstoff, gekennzeichnet durch ein Speichervolumen, das aus einer feinverteilten amorphen Festkörpersubstanz mit tetraedischer Koordination besteht, in welchem atomarer Wasserstoff gebunden werden kann.

2. Reversibler Speicher nach Anspruch 1, dadurch gekennzeichnet, dass die Substanz Silizium ist.

3. Reversibler Speicher nach Anspruch 1, dadurch gekennzeichnet, dass die Substanz Germanium ist.

4. Reversibler Speicher nach Anspruch 1, dadurch gekennzeichnet, dass die Substanz Kohlenstoff ist.

5. Verfahren zum Betrieb eines reversiblen Speichers für gasförmigen Wasserstoff, gekennzeichnet durch mindestens einen der folgenden Schritte:
— molekularer Wasserstoff wird mit feinverteiltem amorphen Silizium zur Reaktion gebracht in Anwesenheit einer Energiequelle zum Dissoziieren des molekularen Wasserstoffs in atomaren Wasserstoff,
— Wasserstoff in kovalenter Bindung enthaltendes feinverteiltes amorphes Silizium wird auf eine Temperatur erhitzt, die für die Freigabe von gasförmigem Wasserstoff ausreicht.

6. Verfahren zum Betrieb eines reversiblen Speichers für gasförmigen Wasserstoff, gekennzeichnet durch mindestens einen der folgenden Schritte:
— Silan (SiH$_4$) wird mit Wasserstoff zur Reaktion gebracht in Anwesenheit einer Energiequelle zum Dissoziieren von Silan und Wasserstoff in feinverteiltes hydriertes Silizium,
— Wasserstoff in kovalenter Bindung enthaltendes feinverteiltes Silizium wird auf eine Temperatur erhitzt, die für die Freigabe von Wasserstoff ausreicht,

— molekularer Wasserstoff wird mit feinverteiltem amorphen Silizium zur Reaktion gebracht in Anwesenheit einer Energiequelle zum Dissoziieren des molekularen Wasserstoffs in atomaren Wasserstoff.

7. Verfahren nach einem der beiden Ansprüche 5 oder 6, dadurch gekennzeichnet, dass die Energiequelle ein mittels einer Spule aufgebrachtes Hochfrequenzfeld ist.

8. Verfahren nach Anspruch 7, dadurch gekennzeichnet, dass die Temperatur 550° C nicht überschreitet.

## Claims

1. Rechargeable storage means for binding gaseous hydrogen, characterized by a storage medium consisting of a finely divided amorphous tetrahedrally coordinated material in which atomic hydrogen can be bonded.

2. Rechargeable storage as claimed in claim 1, characterized in that said material is silicon.

3. Rechargeable storage as claimed in claim 1, characterized in that said material is germanium.

4. Rechargeable storage as claimed in claim 1, characterized in that said material is carbon.

5. Process for handling a rechargeable storage for gaseous hydrogen, characterized by at least one of the following steps:

— reacting molecular hydrogen with finely divided amorphous silicon in the presence of an energy source operable to disassociate said molecular hydrogen into atomic hydrogen,

— heating finely divided amorphous silicon containing covalently bonded hydrogen to a temperature sufficient to release gaseous hydrogen.

6. Process for handling a rechargeable storage for gaseous hydrogen, characterized by at least one of the following steps:

— reacting silane ($SiH_4$) with hydrogen in the presence of an energy source operable to disassociate said silane and said hydrogen into finely divided hydrogenated silicon,

— heating finely divided silicon containing covalently bonded hydrogen to a temperature sufficient to release said hydrogen,

— reacting molecular hydrogen with finely divided amorphous silicon in the presence of an energy source operable to disassociate said molecular hydrogen into atomic hydrogen.

7. Process as claimed in claim 5 or 6, characterized in that said energy source is a highfrequency field applied by a coil.

8. Process as claimed in claim 7, characterized in that the temperature does not exceed 550° C.

## Revendications

1. Moyen de stockage rechargeable pour hydrogène gazeux, caractérisé par un milieu de stockage composé d'un matériau amorphe tétraédriquement coordonné finement divisé, dans lequel de l'hydrogène atomique peut être lié.

2. Moyen de stockage rechargeable selon la revendication 1, caractérisé en ce que ledit matériau est du silicium.

3. Moyen de stockage rechargeable selon la revendication 1, caractérisé en ce que ledit matériau est du germanium.

4. Moyen de stockage rechargeable selon la revendication 1, caractérisé en ce que ledit matériau est du carbone.

5. Méthode de manipulation d'un moyen de stockage rechargeable pour l'hydrogène gazeux, caractérisé par au moins l'une des étapes suivantes:

— la réaction d'hydrogène moléculaire avec du silicium amorphe finement divisé en présence d'une source d'énergie fonctionnant pour dissocier ledit hydrogène moléculaire en hydrogène atomique,

— le réchauffement du silicium amorphe finement divisé contenant de l'hydrogène lié par covalence à une température suffisante pour libérer de l'hydrogène gazeux.

6. Méthode pour manipuler un moyen de stockage rechargeable pour hydrogène gazeux, caractérisé par au moins l'une des étapes suivantes:

— la réaction de silane ($SiH_4$) avec de l'hydrogène en présence d'une source d'énergie fonctionnant pour dissocier ledit silane et ledit hydrogène en silicium hydrogéné finement divisé,

— le réchauffement de silicium finement divisé contenant de l'hydrogène lié par covalence à une température suffisante pour libérer ledit hydrogène,

— la réaction d'hydrogène moléculaire avec du silicium amorphe finement divisé en présence d'une source d'énergie fonctionnant pour dissocier ledit hydrogène moléculaire en hydrogène atomique.

7. Méthode selon l'une des revendications 5 ou 6, caractérisé en ce que ladite source d'énergie est un champ de haute fréquence appliqué par une bobine.

8. Méthode selon la revendication 7, caractérisée en ce que la température n'excède pas 550° C.

FIG. 1

FIG. 2

FIG. 3